# EUROPEAN PATENT APPLICATION

(11) **EP 3 627 768 A1**
(43) Date of publication of application: **25.03.2020**
(21) Application number: 18866977.4
(22) Date of filing: 08.10.2018
(51) Int. Cl.: H04L 12/24

(54) **SERVICE CONFIGURATION METHOD AND APPARATUS FOR SDN**

(30) Priority: 10.10.2017 CN 201710935594
(71) Applicant: ZTE Corporation, Shenzhen, Guangdong 518057 (CN)
(72) Inventor: DING, Jianwu, Shenzhen Guangdong 518057 (CN); CHEN, Huanan, Shenzhen Guangdong 518057 (CN); HUANG, Xiaoying, Shenzhen Guangdong 518057 (CN)
(74) Representative: Baudler, Ron
(86) International application number: PCT/CN2018/109333
(87) International publication number: WO 2019/072147

(57) **Abstract**

A service configuration method and apparatus for an SDN, said method comprising: configuring, in an SDN controller, model correlation information, the model correlation information being information concerning a correlation between a controller configuration model and a device southbound interface model (101); and using the model correlation information to construct service data as device model data, and sending the device model data to a corresponding device (102).

## Description

### TECHNICAL FIELD

The present application relates to the technical field of Software Defined Network (SDN) and specifically relates to a service configuration method and apparatus for a SDN.

### BACKGROUND

A SDN completes service configuration and management by virtue of unified management of a SDN controller for devices in a network, so that the deployment and maintenance for network services are simplified.

The SDN controller needs to manage different types of devices from different manufacturers and sends a configuration to each device according to the arrangement of a user, and different devices are generally provided with different southbound interface models. In some cases, the SDN controller maps service data as configuration models of devices and sends the configuration models of the devices to corresponding devices through sending channels. However, the SDN controller is incapable of dynamically regulating the device types managed by the SDN controller, the southbound interface model corresponding to each type of device can only be configured to the SDN controller in advance, and the SDN controller needs to be rebooted to take effect.

With regard to the problem that the SDN controller cannot manage new types of devices without rebooting, no effective solutions have been proposed at present.

### SUMMARY

The following content is a summary of subject matters described in detail herein. The summary is not intended to limit the protective scope of claims.

Embodiments of the present disclosure provide a service configuration method and apparatus for a SDN so that new types of devices can be managed in the case that a SDN controller is not rebooted.

The present application provides the following technical solutions.

A service configuration method for a SDN includes: configuring, in a SDN controller, model correlation information, wherein the model correlation information is information concerning a correlation between a controller configuration model and a device southbound interface model; and using the model correlation information to construct service data as device model data, and sending the device model data to a corresponding device.

The present application further provides a service configuration apparatus for a SDN, including: a configuration module adapted to configure, in a SDN controller, model correlation information, wherein the model correlation information is information concerning a correlation between a controller configuration model and a device southbound interface model; and a service processing module adapted to use the model correlation information to construct service data as device model data and send the device model data to a corresponding device.

The present application further provides a service configuration apparatus for a SDN, including: a memory storing a computer program; and a processor configured to read the computer program to perform the steps of the above-mentioned service configuration method for the SDN.

The present application further provides a computer-readable storage medium storing a computer program which, when executed by a processor, cause the processor to perform the steps of the above-mentioned service configuration method for the SDN.

Other aspects may be understood after accompanying drawings and detailed description are read and comprehended.

### BRIEF DESCRIPTION OF DRAWINGS

Fig. 1 is a schematic flow diagram of a service configuration method for a SDN according to an embodiment of the present disclosure;
Fig. 2 is a schematic flow diagram of sent data according to by an embodiment of the present disclosure;
Fig. 3 is a schematic exemplary specific flow diagram of the service configuration method for the SDN according to an embodiment of the present disclosure;
Fig. 4 is a schematic compositional structure diagram of a service configuration apparatus according to an embodiment of the present disclosure; and
Fig. 5 is a schematic diagram of a service configuration process for the SDN according to an example of the present disclosure.

### DETAILED DESCRIPTION

Embodiments of the present disclosure will be described hereunder in detail in conjunction with accompanying drawings.

Steps shown in a flow diagram of an accompanying drawing may be performed in a computer system such as a group of computer executable instructions. Moreover, although a logic order is shown in the flow process, the shown or described steps may be performed in an order different from the order herein in some cases.

In some cases, in an implementation solution of a southbound interface model of a SDN controller, hard coding is needed when devices from different manufacturers are sent, and the SDN controller needs to be rebooted to support different devices.

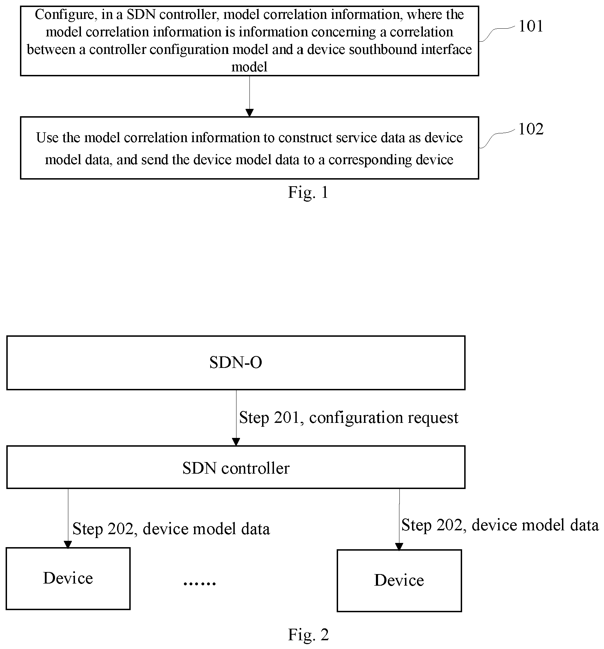

An embodiment of the present disclosure provides a service configuration method for a SDN, as shown in Fig. 1, the service configuration method may include the following steps 101 to 102.

In step 101, model correlation information is configured in a SDN controller, and the model correlation information is information concerning a correlation between a controller configuration model and a device southbound interface model.

In step 102, the model correlation information is used to construct service data as device model data, and the device model data is sent to a corresponding device.

In the present embodiment, the model correlation information is configured to the SDN controller, so that the SDN controller may use the model correlation information to send the service data to the corresponding device. In this way, only the model correlation information needs to be updated when a new type of device needs to be added, but hard coding does not need any more, and therefore, there is no need to reboot the SDN controller to support different devices, the operation is easy to realize, the cost is low, and application requirements that the SDN needs to realize unified management for the devices from a plurality of manufacturers and the types of the devices managed by the SDN generally need to be updated may be met.

In the embodiment, the step that the model correlation information is configured in the SDN controller may include: a configuration file is written in the SDN controller, and the configuration file includes the information concerning the correlation between the controller configuration model and the device southbound interface model. In this way, the SDN controller may realize compatibility of the different devices from different manufacturers by dynamically loading the configuration file, so that the different devices from the different manufacturers are supported by the SDN controller and further the different types of devices are supported by the controller without rebooting the SDN controller.

As another implementation way, the model correlation information is configured in the SDN controller may include: configuration files corresponding to different device types are written in the SDN controller, and each of the configuration files includes the information concerning the correlation between the device southbound interface model under a corresponding device type and the controller configuration model. In this way, the different configuration files are configured for the different device types, so that it is convenient to realize management, and reading is easier to realize during use.

When needing to be added, a new device type is added into the SDN controller by updating the model correlation information. As one implementation way, when the new device type needs to be added, the above-mentioned method may further include that: when the new device type needs to be added, model correlation information corresponding to the new type of device is created and written into the SDN controller according to the device southbound interface model of the new device type and the controller configuration model of the SDN controller. As one implementation way, when the new device type needs to be added, a configuration file corresponding to the new type of device is created and stored in the SDN controller according to the device southbound interface model of the new device type and the controller configuration model of the SDN controller, and the configuration file records the information concerning the correlation between the device southbound interface model of the new type of device and the controller configuration model.

In the embodiment, the configuration file may record the model correlation information in various ways. As one implementation way, the configuration file may record a correlation between a field in the controller configuration model and a field in the device southbound interface model by using a key value mapping format. In this way, not only the content of the configuration file is convenient to be updated, but also it is easy to construct the device model data based on the configuration file.

In the embodiment, the step that the model correlation information is used to construct service data as device model data may include: the model correlation information of the corresponding device type is read according to a device and an interface appointed in a configuration request of a SDN Orchestrator (SDN-O), and the read model correlation information is used to construct network service data as device model data.

The exemplary implementation way of the technical detail of the embodiment is described in detail below.

As shown in Fig. 2 which is an exemplary implementation process of step 102, and the process may include the following steps 201 to 202.

In step 201, a user configures a network service by virtue of a SDN Orchestrator (SDN-O), the SDN-O sends a configuration request to the SDN controller, and the configuration request carries information of a device appointed by a user and information of an appointed interface.

In an actual application, the information of the appointed device may be a name, code, type, manufacturer or other similar identification information of the device. The information of the appointed interface may be an address, code or other similar identification information of the interface.

In step 202, after the SDN controller receives the configuration request of the SDN-O, the corresponding model correlation information is read according to the information of the device appointed by the user and the information of the appointed interface in the configuration request, the data of the corresponding service is converted into device model data of the corresponding device type by utilizing the model correlation information, and the device model data is sent to the device appointed by the user by virtue of a southbound configuration channel.

Herein, the corresponding model correlation information refers to the information concerning the correlation between the device southbound interface model under the corresponding device type and the controller configuration model.

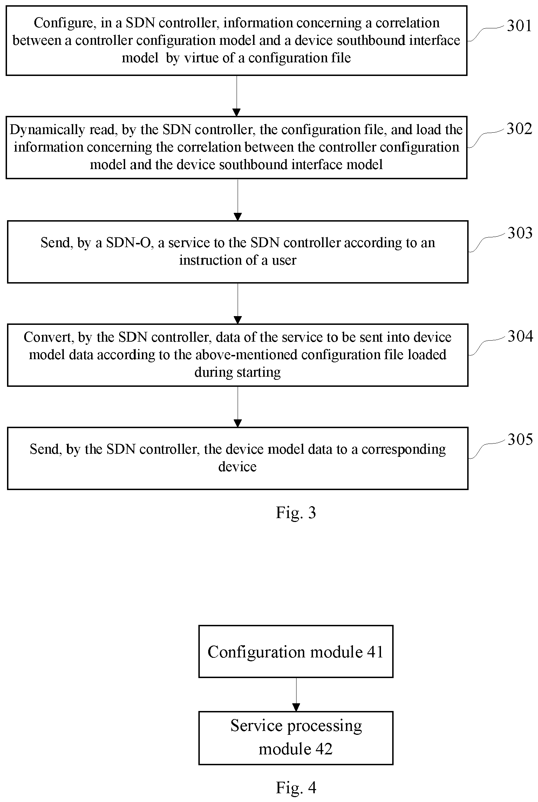

As shown in Fig. 3 which is an exemplary implementation process of the above-mentioned method in the embodiment, and the process may include the following steps 301 t0 305.

In step 301, information concerning a correlation between a controller configuration model and a device southbound interface model is configured in a SDN controller by virtue of a configuration file.

In step 302, the SDN controller dynamically reads the configuration file and loads the information concerning the correlation between the controller configuration model and the device southbound interface model.

In step 303, a SDN-O sends a service to the SDN controller according to an instruction of a user.

In step 304, the SDN controller converts data of the service to be sent into device model data according to the above-mentioned configuration file loaded during starting.

In step 305, the SDN controller sends the device model data to a corresponding device.

It should be noted that Fig. 2 and Fig. 3 are only exemplary implementation processes. The above-mentioned method in the embodiment may also be implemented by other specific processes which are not limited herein.

An embodiment of the present disclosure further provides a service configuration apparatus for a SDN, as shown in Fig. 4, the service configuration apparatus may include a configuration module 41 and a service processing module 42.

The configuration module 41 is adapted to configure, in a SDN controller, model correlation information, where the model correlation information is information concerning a correlation between a controller configuration model and a device southbound interface model.

The service processing module 42 is adapted to use the model correlation information to construct service data as device model data and send the device model data to a corresponding device.

In the embodiment, the configuration module 41 is adapted to write, in the SDN controller, a configuration file, and the configuration file includes the information concerning the correlation between the controller configuration model and the device southbound interface model.

In the embodiment, the configuration module 41 is adapted to write, in the SDN controller, configuration files corresponding to different device types, and each of the configuration files includes the information concerning the correlation between the device southbound interface model under a corresponding device type and the controller configuration model.

In one implementation way, the configuration file may record a correlation between a field in the controller configuration model and a field in the device southbound interface model by using a key value mapping format.

In the embodiment, the service processing module 42 is adapted to read the model correlation information of the corresponding device type according to a device and an interface appointed by a network service sent by a user and use the read model correlation information to construct network service data as device model data.

In an actual application, the configuration module 41 and the service processing module 42 in the above-mentioned service configuration apparatus for the SDN may be software, hardware or a combination thereof.

The service configuration apparatus for the SDN in the embodiment may be arranged in a computer device. In one implementation way, the computer device may be a server capable of operating the SDN controller.

An embodiment of the present disclosure further provides a service configuration apparatus for a SDN, including: a memory storing a computer program; and a processor configured to read the computer program to perform the operation of the above-mentioned service configuration method for the SDN.

In an actual application, the service configuration apparatus for the SDN in the embodiment may be implemented by virtue of any one computer device capable of supporting a corresponding function. In one implementation way, the computer device may be a server capable of operating the SDN controller.

Other technical details of the embodiment refer to the embodiment of the above-mentioned service configuration method for the SDN.

An embodiment of the present disclosure further provides a computer-readable storage medium, a computer program is stored in the computer-readable storage medium, and steps of the above-mentioned service configuration method for the SDN are implemented when the computer program is executed by the processor.

In the embodiment, the above-mentioned computer-readable storage medium may include various media capable of storing program codes such as a U disk, a ROM (Read-Only Memory), a RAM (Random Access Memory), a mobile hard disk, a diskette or an optical disc.

Other technical details of the embodiment refer to the embodiment of the above-mentioned service configuration method for the SDN.

The exemplary implementation way of each of the above-mentioned embodiments is described in detail below. It should be noted that all examples described hereunder may be combined arbitrarily. Moreover, in an actual application, each of the above-mentioned embodiments may also be implemented in other ways, and each process, execution process and the like in the examples described hereunder may also be regulated according to a demand of the actual application.

In the example, interface configuration is taken as an example to be described in detail.

In the example, the controller configuration model is described by using an xml file, with the controller configuration model of the interface configuration as shown in Fig. 1 as an example, wherein the controller configuration model is described by using the xml file according to a specific service field.

**Table 1**

| |
|---|
| <?xml version="1.0" encoding="UTF-8"?> |
| <module name="port"> |
| <Port> |
| <Name type="string"></Name> |
| <Vrf type="string"></Vrf> |
| <address> |
| <IPv4> |
| <Ipv4-Address type="string" ></Ipv4-Address> |
| <Ipv4-Mask type=" string"></Ipv4-Mask> |
| </IPv4> |
| <IPv6> |
| <Ipv6-Address type="string"></Ipv6-Address> |
| <Ipv6-Mask type="string"></Ipv6-Mask> |
| </IPv6> |
| </address> |
| </Port> |
| </module> |

The device southbound interface model may be a yang file. In the example, the device southbound interface model is an interface file used by different manufacturer configuration services.

Table 2 described hereunder is an example of a device southbound interface model of a manufacturer A, and the name of the device southbound interface model is zxr10-interfaces@2016-06-22.yang.

**Table 2**

| |
|---|
| module zxr10-interfaces { |
| namespace http://www.zte.com.cn/zxr10/netconf/schema/rosng/interfaces"; |
| prefix intf; |
| yang-version 1; |
| import ietf-inet-types {prefix inet; revision-date 2010-09-24;} |
| import zxr10-netconf-defs{prefix ncd;} |
| |
| organization "ZTE Corporation"; |
| contact "ZTE Corporation Nanjing Institute of ZTE Corporation No.68."; |
| description "The netconf module to describe the Interface Management"; |
| |
| container configuration { |
| container interfaces { |
| container interface-configuration { |
| list interface { |
| leaf name { |
| type string ; |
| } |
| |
| container vrf { |
| leaf ip-vrf- forwarding { |
| type string { |
| length 1..32 ; |
| } |
| } |
| } |
| container ipv4 { |
| list address { |
| leaf address { |
| type inet:ipv4-address ; |
| } |
| leaf mask { |
| type ipv4-mask; |
| } |
| } |
| } |
| container ipv6 { |
| list address { |
| leaf address { |
| type ncd:ipv6-address ; |
| } |
| leaf prefix-len { |
| type ncd:ipv6-mask-length { range 1..128 ; |
| } |
| } |
| } |
| } |
| } |
| } |
| } |
| } |
| } |

Table 3 described hereunder is an example of a device southbound interface model of a manufacturer B, and the name of the device southbound interface model is port-config.yang.

**Table 3**

| |
|---|
| module port-config { |
| namespace "***/***/netconf/schema/port-config"; |
| prefix port; |
| yang-version 1; |
| organization "*** Corporation"; |
| description "The netconf module to describe the Port Management"; |
| container configuration { |
| container port-configuration { |
| list port { |
| leaf name { |
| type string ; |
| } |
| container vrf { |
| leaf vrf-name { |
| type string { |
| length 1..32 ; |
| } |
| } |
| } |
| container ip-address{ |
| container ipv4 { |
| list address { |
| leaf address { |
| type inet:ipv4-address ; |
| } |
| leaf mask { |
| type ipv4-mask; |
| } |
| } |
| } |
| container ipv6 { |
| list address { |
| leaf address { |
| type string; |
| } |
| leaf prefix { |
| type int; |
| } |
| } |
| } |
| } |
| } |
| } |
| } |
| } |

The information concerning the correlation between the controller configuration model and the device southbound interface model may be obtained based on the controller configuration model and each device southbound interface model. In the example, the correlation information may be implemented as a configuration file. In the example, the configuration file is identified by a pure text format and uses a "Key-Value" mapping format, the left side is a corresponding field in a service model, and the right side is fields in device southbound interface yang files corresponding to different manufacturers.

The specific examples of the configuration files obtained based on the above-mentioned Table 1 and Table 2 are shown as Table 4 described hereunder, and Table 4 is a configuration file of a correlation between the controller configuration model and the device southbound interface model of the manufacturer A.

**Table 4**

| |
|---|
| Port.Name = configuration.interfaces.interface.configuration.interface.name |
| Port.Vrf = configuration.interfaces.interface-configuration.interface.vrf.ip-vrf-forwarding |
| Port.IPv4.Ipv4-Address= configuration.interfaces.interface-configuration.interface.ipv4.address.address |
| Port.IPv4.Ipv4-Mask= configuration.interfaces.interface-configuration.interface.ipv4.address.mask |
| Port.IPv6.IPv6-Address= configuration.interfaces.interface-configuration.interface.ipv6.address.address |
| Port.IPv6.IPv6-Mask= configuration.interfaces.interface-configuration.interface.ipv6.address.prefix-len |

The specific examples of the configuration files obtained based on the above-mentioned Table 1 and Table 3 are shown as Table 5 described hereunder, and Table 5 is a configuration file of a correlation between the controller configuration model and the device southbound interface model of the manufacturer B.

**Table 5**

| |
|---|
| Port.Name = configuration.port-configuration.port.name |
| Port.Vrf = configuration.port-configuration.port.vrf. vrf-name |
| Port.IPv4.Ipv4-Address= configuration.port-configuration.port.ip-address.ipv4.address.address |
| Port.IPv4.Ipv4-Mask= configuration.port-configuration.port.ip-address.ipv4.address.mask |
| Port.IPv6.IPv6-Address= configuration.port-configuration.port.ip-address.ipv6.address.address |
| Port.IPv6.IPv6-Mask= configuration.port-configuration.port.ip-address.ipv6.address.prefix |

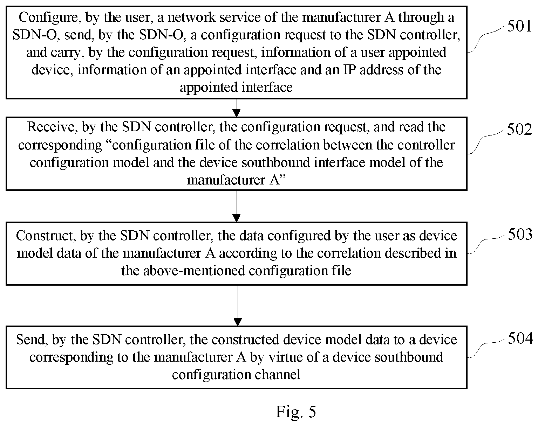

Based on the above-mentioned configuration file in the example, with the manufacturer A as an example, an implementation process that a user configures an IP address for an interface of an appointed device through a SDN controller, as shown in Fig. 5, may include the following steps 501 to 504.

In step 501, the user configures a network service of the manufacturer A through a SDN-O, the SDN-O sends a configuration request to the SDN controller, and the configuration request carries information of a user appointed device, information of an appointed interface and an IP address of the appointed interface.

In step 502, the SDN controller receives the configuration request and reads the corresponding "configuration file of the correlation between the controller configuration model and the device southbound interface model of the manufacturer A" according to a device type indicated in the information of the user appointed device.

In step 503, the SDN controller constructs the data configured by the user as device model data of the manufacturer A according to the correlation described in the above-mentioned configuration file.

In step 504, the SDN controller sends the constructed device model data to a device corresponding to the manufacturer A by virtue of a device southbound configuration channel.

It should be understood by the ordinary skilled in the art that functional modules/units in all or some of steps, systems and apparatuses in the above-mentioned method may be implemented as software, firmware, hardware and an appropriate combination thereof. In a hardware implementation way, the division of the functional modules/units mentioned in the above description is uncertain to correspond to the division of physical units; for example, one physical component may have a plurality of functions, or one function or step may be executed by the cooperation of several physical components. Some components or all the components may be implemented as software executed by a processor such as a digital signal processor or a microprocessor, or implemented as hardware, or implemented as integrated circuits such as special integrated circuits. Such software may be distributed on a computer-readable storage medium, and the computer-readable storage medium may include a computer storage medium (or a non-temporary medium) and a communication medium (such as a temporary medium). As publically known by the ordinary skilled in the art, the term "computer storage medium" includes volatile and non-volatile as well as removable and non-removable media implemented in any method or technology for storing information (such as a computer-readable instruction, a data structure, a program module or other data). The computer storage medium includes, but is not limited to a RAM (Random Access Memory), a ROM (Read Only Memory), an EEPROM (Electrically Erasable Programmable Read-Only Memory), a flash memory or other memory technologies, a CD-ROM (Compact Disc Read-Only Memory), a digital multifunctional disk (DVD) or other optical disc memories, disk boxes, cassettes, magnetic disk memories or other magnetic storage apparatuses or any other medium which may be configured to store expected information and may be accessed by a computer. In addition, it is publically known by the skilled in the art that the communication medium generally includes a computer-readable instruction, a data structure, a program module or other data in modulated data signals such as carrier waves or other transmission mechanisms and may include any one information delivery medium.

## Claims

1. A service configuration method for a Software Defined Network (SDN), comprising:
configuring, in a SDN controller, model correlation information, wherein the model correlation information is information concerning a correlation between a controller configuration model and a device southbound interface model (101); and
using the model correlation information to construct service data as device model data, and sending the device model data to a corresponding device (102).

2. The service configuration method according to claim 1, wherein the step of configuring, in the SDN controller, the model correlation information comprises:
writing, in the SDN controller, a configuration file, wherein the configuration file comprises the information concerning the correlation between the controller configuration model and the device southbound interface model.

3. The service configuration method according to claim 1, wherein the step of configuring, in the SDN controller, the model correlation information, comprises:
writing, in the SDN controller, configuration files corresponding to different device types, wherein each of the configuration files comprises the information concerning the correlation between the device southbound interface model under a corresponding device type and the controller configuration model.

4. The service configuration method according to claim 2 or 3, wherein
each configuration file records a correlation between a field in the controller configuration model and a field in the device southbound interface model by using a key value mapping format.

5. The service configuration method according to any one of claims 1-3, wherein the step of using the model correlation information to construct service data as device model data comprises:
reading, according to a device and an interface appointed in a configuration request of a SDN Orchestrator (SDN-O), the model correlation information of a corresponding device type, and using the read model correlation information to construct network service data as device model data.

6. A service configuration apparatus for a Software Defined Network (SDN), comprising:
a configuration module (41) adapted to configure, in a SDN controller, model correlation information, wherein the model correlation information is information concerning a correlation between a controller configuration model and a device southbound interface model; and
a service processing module (42) adapted to use the model correlation information to construct service data as device model data and send the device model data to a corresponding device.

7. The service configuration apparatus according to claim 6, wherein
the configuration module (41) is adapted to write, in the SDN controller, a configuration file, wherein the configuration file comprises the information concerning the correlation between the controller configuration model and the device southbound interface model.

8. The service configuration apparatus according to claim 6, wherein
the configuration module (41) is adapted to write, in the SDN controller, configuration files corresponding to different device types, wherein each of the configuration files comprises the information concerning the correlation between the device southbound interface model under a corresponding device type and the controller configuration model.

9. The service configuration apparatus according to claim 7 or 8, wherein
each configuration file records a correlation between a field in the controller configuration model and a field in the device southbound interface model by using a key value mapping format.

10. The service configuration apparatus according to any one of claims 6-8, wherein
the service processing module (42) is adapted to read, according to a device and an interface appointed by a network service sent by a user, the model correlation information of a corresponding device type and use the read model correlation information to construct network service data as device model data.

11. A service configuration apparatus for a Software Defined Network (SDN), comprising:
a memory storing a computer program; and
a processor configured to read the computer program to perform the steps of the service configuration method for the SDN according to any one of claims 1-5.

12. A computer-readable storage medium storing a computer program which, when executed by a processor, cause the processor to perform the steps of the service configuration method for the SDN according to any one of claims 1-5.
